Europäisches Patentamt

European Patent Office

Office européen des brevets

(19)

(11) Veröffentlichungsnummer : **0 097 247**
**B1**

(12)

# EUROPÄISCHE PATENTSCHRIFT

(45) Veröffentlichungstag der Patentschrift :
15.03.89

(51) Int. Cl.⁴ : **B 29 C 39/16, E 06 B 3/26**

(21) Anmeldenummer : **83104939.0**

(22) Anmeldetag : **19.05.83**

(54) **Verfahren zum Herstellen eines Verbundprofils aus metallischen Innen- und Aussenteilen und einem Kunststoff-Isoliersteg.**

(30) Priorität : 23.06.82 DE 3223344

(43) Veröffentlichungstag der Anmeldung :
04.01.84 Patentblatt 84/01

(45) Bekanntmachung des Hinweises auf die Patenterteilung : 15.03.89 Patentblatt 89/11

(84) Benannte Vertragsstaaten :
AT BE CH FR GB IT Li NL

(56) Entgegenhaltungen :
EP--A-- 0 018 612
DE--A-- 2 305 873
FR--A-- 1 455 727
FR--A-- 2 390 575
US--A-- 3 815 216

(73) Patentinhaber : **Ensinger, Wilfried**
**Gottlieb-Daimler-Strasse 6**
**D-7031 Nufringen (DE)**

(72) Erfinder : **Ensinger, Wilfried**
**Gottlieb-Daimler-Strasse 6**
**D-7031 Nufringen (DE)**

(74) Vertreter : **Hoeger, Stellrecht & Partner**
**Uhlandstrasse 14 c**
**D-7000 Stuttgart 1 (DE)**

EP 0 097 247 B1

**Beschreibung**

Die Erfindung betrifft ein Verfahren zum Herstellen eines Verbundprofils aus metallischen Innen- und Außenteilen und zwei in gegenseitigem Abstand angeordneten Kunststoff-Isolierstegen nach dem Oberbegriff des Patentanspruchs 1.

Es ist bekannt (US-A-3 815 216) zwei Teile eines metallischen Verbundprofils durch direktes Anspritzen eines Kunststoff-Isolierstegs miteinander zu verbinden. Dabei sind die einander gegenüberliegenden Abschnitte der Verbundprofilteile, die durch den angespritzten Kunststoff-Isoliersteg verbunden werden, T-förmig ausgebildet, und der angespritzte Kunststoff verteilt sich um diese T-Abschnitte herum, die so eine Verankerung für den Isoliersteg bilden. Wie die eigentliche Anspritzung des Isoliersteges erfolgt, und wie insbesondere die äußere Form des Isoliersteges entsteht, läßt sich der genannten Druckschrift nicht entnehmen. Das bekannte Verfahren ist außerdem nur für die Anspritzung eines einzigen Isoliersteges zwischen die beiden Verbundprofilteile geeignet. Die gleichzeitige Ausbildung von zwei benachbarten, jedoch separaten Isolierstegen an die Verbundprofilteile ist mit dem bekannten Verfahren nicht möglich.

Es ist Aufgabe der Erfindung, ein gattungsgemäßes Verfahren so weiterzubilden, daß gleichzeitig zwei räumlich getrennte Kunststoff-Isolierstege an die metallischen Innen- und Außenteile des Verbundprofiles angespritzt werden können.

Die Aufgabe wird erfindungsgemäß durch die kennzeichnenden Merkmale des Patentanspruchs 1 gelöst.

Vorteilhafte Ausführungsformen der Erfindung sind Gegenstand der Unteransprüche 2 bis 8.

Die nachstehende Beschreibung bevorzugter Ausführungsformen der Erfindung dient im Zusammenhang mit beiliegender Zeichnung der weiteren Erläuterung. Es zeigen :

Fig. 1 in schaubildlicher Querschnittsansicht ein Verbundprofil mit Isolierstegen ;

Fig. 2 eine Spritzkopfanordnung zum Einspritzen der Isolierstege in die Teile des Verbundprofils ;

Fig. 3 eine Schnittansicht (3-3) in Fig. 2 ;

Fig. 4 bis 11 Querschnittsansichten von Verbundprofilen zur Erläuterung weiterer Ausführungsformen der Erfindung.

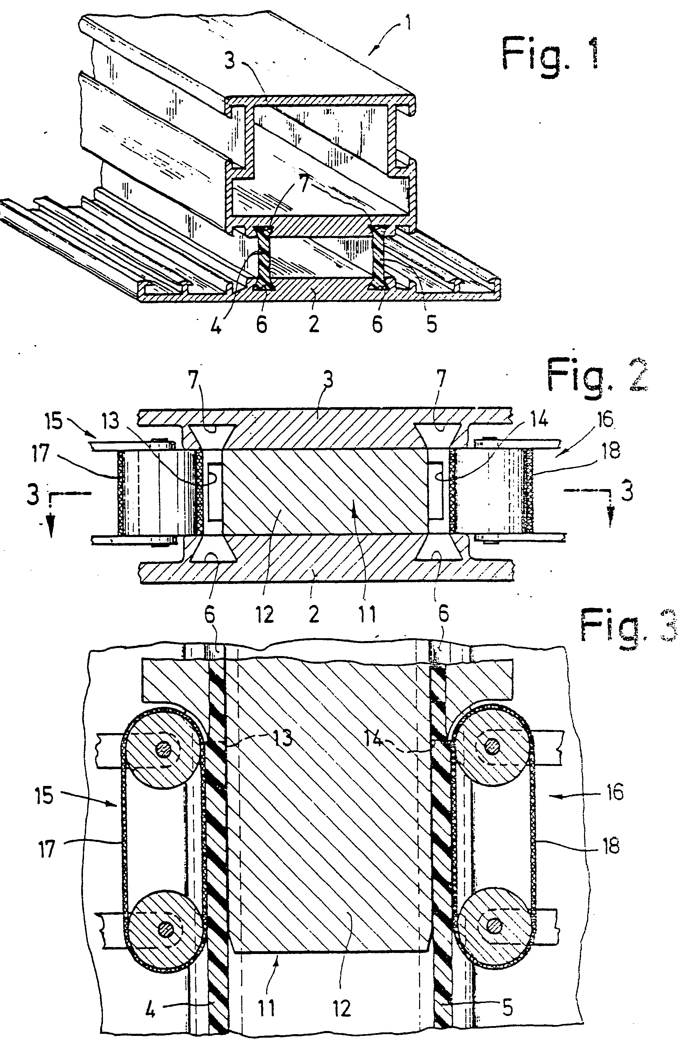

Das in Fig. 1 dargestellte Verbundprofil 1 ist in erster Linie für die Herstellung von Fenster- und Türrahmen sowie Rahmen von Fassadenelementen o. dgl. bestimmt. Es umfasst einen Innenteil 2 und einen Aussenteil 3, die durch zwei längsverlaufende Isolierstege 4, 5 miteinander verbunden sind. Die Teile 2, 3 können aus Aluminium, Aluminiumlegierung oder Stahl bestehen. Die Isolierstege 4, 5 bilden eine wärmedämmende Brücke zwischen den Teilen 2, 3 und bestehen aus hochfestem Kunststoff mit schlechten Wärmeleitungseigenschaften, beispielsweise aus glasfaserverstärktem Polyamid oder Copolyamid, welches auch geschäumt, d. h. zellig oder porös sein kann.

Wie dargestellt, haben die Isolierstege 4, 5 an ihren Enden einen jeweils schwalbenschwanzförmigen Querschnitt Mit diesen schwalbenschwanzförmigen Endbereichen greifen die Isolierstege 4, 5 in entsprechende Nuten 6, 7 der Innen- bzw. Aussenteile 2, 3 ein und vermitteln dadurch eine feste Verbindung zwischen diesen Teilen 2, 3 und den Isolierstegen 4, 5.

Im Gegensatz zu der bisher üblichen Arbeitsweise, bei welcher als besondere Bauteile vorher hergestellte Isolierstege 4, 5 nachträglich in Nuten 6, 7 der Innen- und Aussenteile eingefügt wurden, werden erfindungsgemäss die Isolierstege 4, 5 direkt in die Nuten 6, 7 der in entsprechendem Abstand gehaltenen Innen- und Aussenteile eingespritzt. Nach dem Aushärten des eingespritzten Kunststoffes sind die Teile 1, 2 dann durch den Isoliersteg 6 miteinander verbunden.

Die Fig. 2, 3 zeigen schematisch einen Spritzkopf, mit dessen Hilfe diese direkte Anspritzung der Isolierstege 4, 5 an die Teile 2, 3 des Verbundprofils 1 durchgeführt werden kann. Ein Spritzkopf 11 weist beidseits eines vorspringenden Dornes 12 zwei rechteckige Austrittsöffnungen 13, 14 für plastifiziertes Kunststoffmaterial auf. Der Abstand der Austrittsöffnungen 13, 14 entspricht dem Abstand der Isolierstege 4, 5. Auf der dem Dorn 12 jeweils gegenüberliegenden Seite der Austrittsöffnungen 13, 14 befindet sich eine Rollenanordnung 15, 16 mit endlosem Band 17 bzw. 18. Die Rollenanordnung hat (vgl. Fig. 2) die gleiche Höhenausdehnung wie der Dorn 12. Diese Höhe entspricht dem Abstand der Innen- und Aussenteile 2, 3, wenn diese durch die Isolierstege 4, 5 zum Verbundprofil vereinigt sind. Dementsprechend werden die Innen- und Aussenteile 2, 3 an der Ober- und Unterseite des Spritzkopfes anliegend und hierdurch im richtigen Abstand gehalten zugeführt. Dabei tritt der dem Spritzkopf in herkömmlicher Weise zugeleitete und aus den Öffnungen 13, 14 austretende (heisse) Kunststoff in den Zwischenraum zwischen Dorn 12 und Band 17, 18 ein und gelangt von dort auch in die Nuten 6, 7. Die Innen- und Aussenteile 2, 3 des Verbundprofils werden stetig vorgeschoben, so dass sich durch den eintretenden Kunststoff die Isolierstege 4, 5 bilden. Die Rollenanordnungen 15, 16 mit den Bändern 17, 18 laufen dabei entsprechend der Vorschubgeschwindigkeit der Innen- und Aussenteile 2, 3 mit um.

Es wurde gefunden, dass sich aufgrund des erfindungsgemässen Verfahrens durch direkte Anspritzung der Isolierstege 4, 5 an die Innen- und Aussenteile des Profils 1 ein inniger Verbund zwischen den Stegen 4, 5 und den Teilen 2, 3 ergibt. Eine besonders gute Festigkeit erreicht man dann, wenn man einen Isoliersteg aus geschäumtem, expandierendem Kunststoff in der geschilderten Weise zwischen die Innen- und Aussenteile 2, 3 einspritzt, welcher zur Verstärkung auch Glasfasern oder andere Zuschlagstoffe enthalten kann. Eine Verbesserung der Festigkeit ergibt sich weiterhin, wenn die Innen- und Aussenteile 2, 3, wo sie mit den Isolierstegen 4, 5 in Verbindung treten, also im Bereich der Nuten 6, 7, in an sich bekannter Weise Hinterschneidungen, Rändelungen o. dgl. aufweisen.

Der in Fig. 2 und 3 als Kern dienende Dorn 12 kann auch entfallen, wenn man in den Raum zwischen den Bändern 17, 18 aus einer zwischen den Austrittsöffnungen 13, 14 angeordneten Düse Pressluft einbläst. Der Druck dieser Pressluft reicht aus, um die den Bändern 17, 18 abgekehrten Rückwände der Isolierstege 4, 5 entstehen zu lassen.

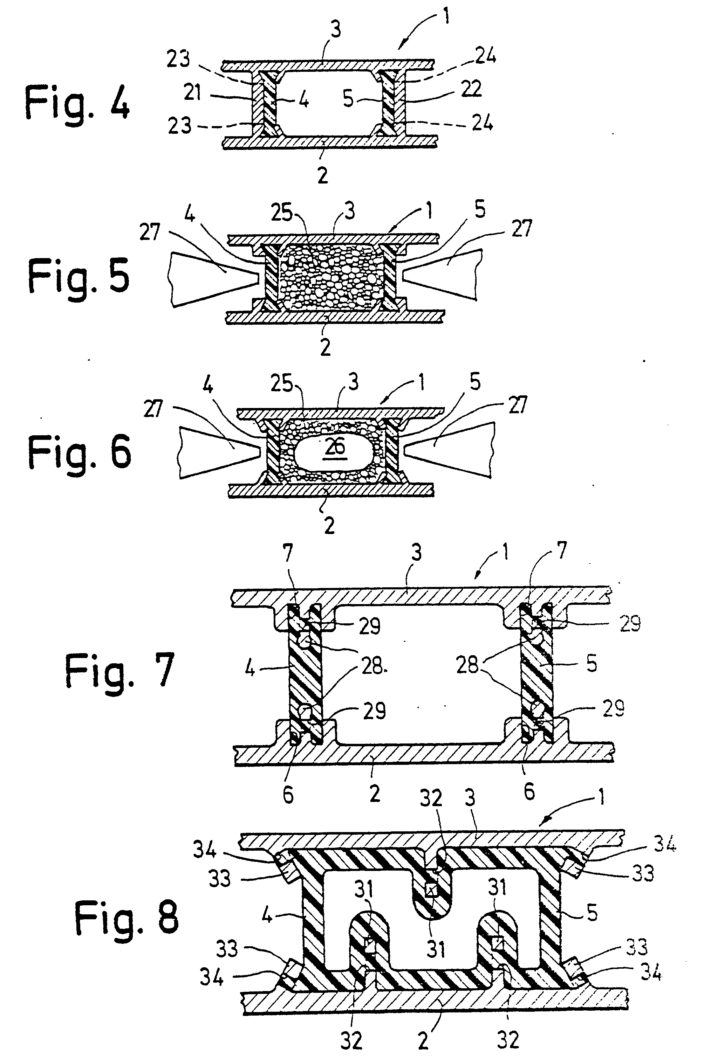

Die Fig. 4 veranschaulicht schematisch eine weitere Ausführungsform des erfindungsgemässen Verfahrens. Wie dargestellt, sind die beiden Innen- und Aussenteile 2, 3 des Verbundprofils 1 in Gestalt eines Hohlkammerprofils durch Stege 21, 22 miteinander verbunden. Diese Stege ersetzen die Rollenanordnung 15, 16 gemäss Fig. 2 und 3. Der eingespritzte Kunststoff legt sich in Form der Isolierstege 4, 5 den jeweiligen Innenseiten der Stege 21, 22 an. Nach dem Einspritzen der Isolierstege 4, 5 werden die Stege 21, 22 entfernt. Hierzu können diese Stege jeweils Soll-Bruchstellen 23, 24 aufweisen, die ein Ablösen der Stege 21, 22 derart gestalten, dass sich schliesslich das in Fig. 1 dargestellte Verbundprofil 1 ergibt.

Wie aus Fig. 5 und 6 hervorgeht, kann in der von den Innen- und Aussenteilen 2, 3 und den Isolierstegen 4, 5 umschlossenen Kammer des Verbundprofils 1 ein wärmedämmender Kunststoff 25, insbesondere ein geschäumter Kunststoff angeordnet werden. Der vom Kunststoff 25 gebildete Isolierkern kann auch als Hohlkammerprofil gemäss Fig. 6 ausgebildet werden, mit einem längs durchgehenden Innenhohlraum 26. Der vom Kunststoff 25 gebildete Isolierkern kann vor, während oder nach dem Anspritzen der Isolierstege 4, 5 an die Innen- und Aussenteile 2, 3 angebracht werden.

Bei vorheriger Einbringung hält der Kunststoff 25 die Innen- und Aussenteile 2, 3 im richtigen Abstand und die Isolierstege 4, 5 können gemäss Fig. 5 und 6 mittels seitlicher Spritzdüsen 27 gleichzeitig angespritzt werden. Die Einbringung des Kunststoffes 25 während des Ausbildens der Isolierstege 4, 5 erfolgt in Coextrusion.

Bei der anhand von Fig. 7 schematisch dargestellten Ausführungsform der Erfindung weisen die Innen- und Aussenteile 2, 3 etwa in der Mitte der die Enden der Isolierstege 4, 5 aufweisenden Nuten 6, 7 einen über den Nutrand vorspringenden Steg 28 mit Durchbrechungen 29 auf. Beim Anspritzen des die Isolierstege 4, 5 bildenden Kunststoffes dringt der plastifizierte Kunststoff in die Druchbrechungen 29 ein und vermittelt hierdurch einen besonders guten Formschluss zwischen den Innen- und Aussenteilen 2, 3 und den Isolierstegen 4, 5.

Auch bei der in Fig. 8 dargestellten Ausführungsform der Erfindung sind im Inneren der von den Innen- und Aussenteilen 2, 3 und den Isolierstegen 4, 5 umschlossenen Kammer vorstehende Metallstege 31 mit Durchbrechungen 32 an den metallischen Innen- und Aussenteilen 2, 3 angeordnet. Diese Stege werden durch das direkte Anspritzen des die Stege 4, 5 bildenden Kunststoffes ebenfalls von letzterem durchdrungen und vermitteln einen schubfesten Formschluss.

Wie in Fig. 8 dargestellt, wird der die Isolierstege 4, 5 bildende Kunststoff so eingespritzt, dass er die gesamte Innenfläche des Hohlkammerprofils überzieht. Im Bereich der Stege 31 bilden sich dabei Vorsprünge, die eine wärmeübertragende Konvektionsbewegung des im Hohlkammerprofil enthaltenden Gases (Luft) verhindern. Auf diese Weise ist die Wärmedämmung verbessert.

Wie weiterhin aus Fig. 8 hervorgeht, weisen auch die Isolierstege 4, 5 an den Aussenseiten begrenzende Nutstege 33 Durchbrechungen 34 auf, in welche der angespritzte Kunststoff eindringt und hierdurch den Formschluss zwischen den Teilen verbessert.

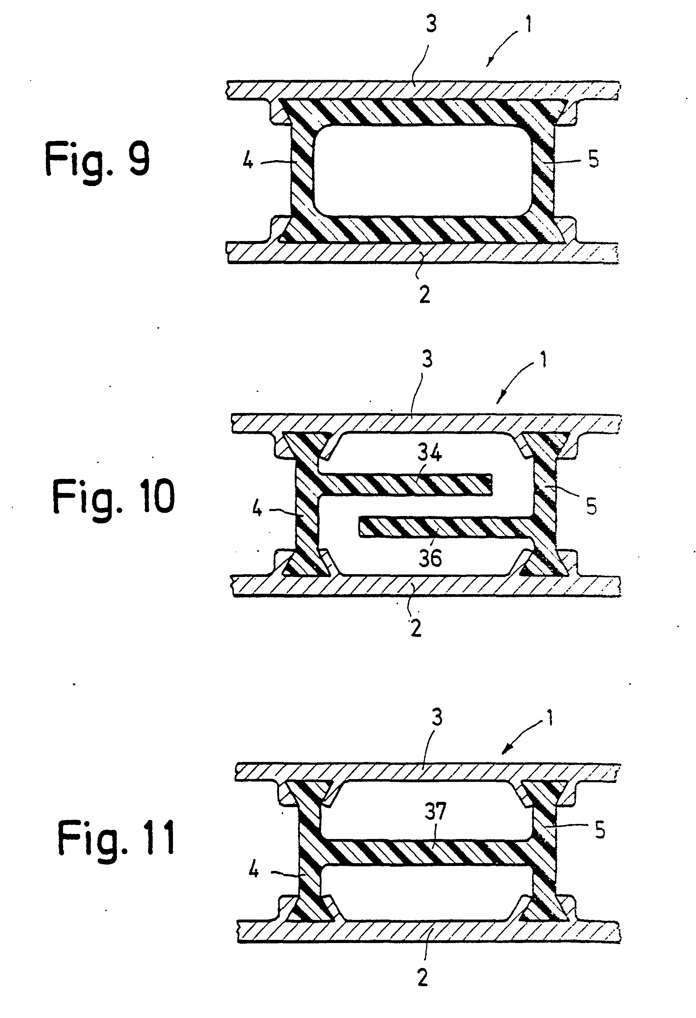

Die Fig. 9 zeigt eine gegenüber Fig. 8 vereinfachte Ausführungsform der Erfindung, bei welcher in das Innere des Hohlkammerprofils vorspringende Stege 31 mit Durchbrechungen 32 fehlen.

Die Fig. 10 und 11 zeigen weitere, erfindungsgemässe Formen von Isolierstegen 4, 5, welche an die Innen- und Aussenteile 2, 3 eines Verbundprofils 1 unmittelbar angespritzt sind. Wie dargestellt, können die Isolierstege 4, 5 Querwände 34, 36, 37 aufweisen, durch die eine Konvektionsströmung im Hohlkammerprofil verhindert ist. In Fig. 10 erstreckt sich, ausgehend vom Isoliersteg 4 eine Querwand 34, die vor dem gegenüberliegenden Isoliersteg 5 endet. Vom Isoliersteg 5 geht in entgegengesetzter Richtung eine Querwand 36 aus, die im Abstand vom Isoliersteg 4 endet. Die Querwand 37 gemäss Fig. 11 ist mit den beiden Isolierstegen 4, 5 verbunden.

Dem die Isolierstege 4, 5 bildenden Kunststoff, der auch geschäumt sein kann, können zur Verstärkung außer Glasfasern noch andere Zuschlagstoffe zugefügt werden, insbesondere Silikate, $SiO_2$, Talkum, Kreide. Außer thermoplastischen lassen sich auch duroplastische Kunststoffe als Isoliersteg an die Teile 2, 3 des Verbundprofils direkt anspritzen.

Bei den Ausführungsformen nach Fig. 5 und 6 kann der (geschäumte) Kunststoff 25 im Wege der Koextrusion auch gemeinsam mit den Isolierstegen 4 und 5 angespritzt werden. Die Außenseiten der Isolierstege 4, 5 können mit zusätzlichen Schutzschichten, z. B. aus Polyaethylen, anderen Polyolefinen oder Polymethacrylat versehen werden, die ebenfalls durch Koextrusion aufgebracht werden können.

**Patentansprüche**

1. Verfahren zum Herstellen eines Verbundprofils (1) aus metallischen Innen- und Außenteilen (2, 3) und zwei in gegenseitigem Abstand angeordneten Kunststoff-Isolierstegen (4, 5), die zur gegenseitigen Verbindung der Innen- und Außenteile mit ihren Randbereichen in Nuten (6, 7) der Innen- und Außenteile eingreifen, dadurch gekennzeichnet, daß man die Innen- und Außenteile (2, 3) in ihrer vorbestimmten Abstandsposition an einem Kunststoff-Spritzkopf (11) mit zwei etwa im Abstand der Isolierstege (4, 5) vorgesehenen Austrittsöffnungen (13, 14) vorbeiführt, den die Isolierstege bildenden Kunststoff gleichzeitig aus je einer Austrittsöffnung zusammenhängend in die jeweils benachbarte Nut (6, 7) der Innen- und Außenteile derart einspritzt, daß nach dem Aushärten des Kunststoffes die Teile durch die beiden Stege fest verbunden sind, und daß man zur Ausformung der Isolierstegseitenwände einerseits einen vom Spritzkopf zwischen den Austrittsöffnungen vorspringenden Dorn (12) und andererseits seitliche Anlageflächen (17, 18 ; 21, 22) vorsieht.

2. Verfahren nach Anspruch 1, dadurch gekennzeichnet, daß man als seitliche Anlageflächen Endlosbänder (17, 18) vorsieht.

3. Verfahren nach Anspruch 1, dadurch gekennzeichnet, daß man als seitliche Anlageflächen einstückig mit den Innen- und Außenteilen (2, 3) verbundene Stege (21, 22) vorsieht und diese nach Anspritzen der Isolierstege (4, 5) abtrennt.

4. Verfahren nach einem der Ansprüche 1, 2 oder 3, dadurch gekennzeichnet, daß man die Isolierstege (4, 5) aus geschäumtem, expandierendem Kunststoff spritzt.

5. Verfahren nach einem der voranstehenden Ansprüche, dadurch gekennzeichnet, daß man zum Spritzen der Isolierstege (4, 5) einen glasfaserverstärkten Kunststoff verwendet.

6. Verfahren nach Anspruch 5, dadurch gekennzeichnet, daß man als Kunststoff ein glasfaserverstärktes Polyamid oder Copolyamid einsetzt.

7. Verfahren nach einem der voranstehenden Ansprüche, dadurch gekennzeichnet, daß man den die Isolierstege (4, 5) bildenden Kunststoff in Durchbrechungen (29, 32, 34) der Innen- und Außenteile (2, 3) anspritzt.

8. Verfahren nach einem der voranstehenden Ansprüche, dadurch gekennzeichnet, daß man die Isolierstege (4, 5) mit Querwänden (34, 36, 37) an die Innen- und Außenteile (2, 3) anspritzt.

## Claims

1. A process for producing a composite section (1) from metallic inner and outer parts (2, 3) and two insulating vertical legs (4, 5), made of synthetic material, arranged opposite one another at a distance apart, which engage by means of their end regions in grooves (6, 7) in the inner and outer parts for the connection of the inner and outer parts opposite one another, characterized in that the inner and outer parts (2, 3) are led, positioned with their predetermined separation, past a synthetic material injection head (11) provided with two outlet openings (13, 14) spaced at about the distance between the insulating vertical legs (4, 5), which both simultaneously inject the synthetic material forming the insulating vertical legs from the associated outlet opening into the groove (6, 7) in the inner and outer parts which is adjacent at that time, in such a way that after the hardening of the synthetic material the parts are firmly connected by means of the two vertical legs, and that in order to shape the side walls of the insulating vertical legs, on the one hand, a tongue (12) is provided projecting from the injection head between the outlet openings and, on the other hand, lateral contact surfaces (17, 18 ; 21, 22) are provided.

2. A process according to Claim 1, characterized in that endless bands (17) are provided as the lateral contact surfaces (17, 18).

3. A process according to Claim 1, characterized in that vertical legs (21, 22) connected in one piece with the inner and outer parts (2, 3) are provided as the lateral contact surfaces and these are cut off after the insulating vertical legs (4, 5) are injection moulded on.

4. A process according to one of Claims 1, 2 or 3, characterized in that the insulating vertical legs (4, 5) are injection moulded using foamed, expanded synthetic material.

5. A process according to one of the preceding Claims, characterized in that a glass fibre-reinforced synthetic material is used for the injection moulding of the insulating vertical legs (4, 5).

6. A process according to Claim 5, characterized in that a glass fibre-reinforced polyamide or copolyamide is used as synthetic material.

7. A process according to one of the preceding Claims, characterized in that the synthetic material forming the insulating vertical legs (4, 5) is injected through openings (29, 32, 34) in the inner and outer parts (2, 3).

8. A process according to one of the preceding Claims, characterized in that the insulating vertical legs (4, 5) are injection moulded on the inner and outer parts (2, 3) with cross walls (34, 36, 37).

## Revendications

1. Procédé de fabrication d'un profilé composé (1) comprenant des parties intérieure et extérieure (2, 3) et deux âmes isolantes (4, 5) en matière plastique écartées l'une de l'autre, qui sont engagées par leurs bords dans des rainures (6, 7) des parties intérieure et extérieure pour relier mutuellement ces parties intérieure et extérieure, caractérisé en ce qu'on fait passer les parties intérieure et extérieure (2, 3), à leur position écartée prédéterminée, devant une tête d'injection de matière plastique (11) ayant deux orifices de sortie (13, 14) prévus sensiblement à l'écartement des âmes isolantes (4, 5), on injecte la matière plastique constituant les âmes isolantes en même temps hors de chaque orifice de sortie en continu dans chacune des rainures respectives voisines (6, 7) de la partie intérieure et de la partie extérieure, de sorte qu'après le durcissement de la matière plastique ces parties sont reliées rigidement par les deux âmes, et, pour le démoulage des parois latérales des âmes isolantes, on prévoit d'une part un mandrin (12) saillant à partir de la tête d'injection entre les orifices de sortie et, d'autre part, des surfaces de contact latérales (17, 18 ; 21, 22).

2.Procédé selon la revendication 1, caractérisé en ce qu'on prévoit, comme surfaces de contact latérales, des bandes sans fin (17, 18).

3. Procédé selon la revendication 1, caractérisé en ce qu'on prévoit, comme surfaces de contact latérales, des âmes (21, 22) réunies en un seul tenant avec les parties intérieure et extérieure (2, 3) et on les sépare après injection des âmes isolantes (4, 5).

4. Procédé selon l'une des revendications 1 à 3, caractérisé en ce qu'on injecte de la matière plastique en mousse expansible pour constituer les âmes isolantes (4, 5).

5. Procédé selon l'une des revendications précédentes, caractérisé en ce qu'on utilise, pour la formation par injection des âmes isolantes (4, 5), une matière plastique renforcée par des fibres de verre.

6. Procédé, selon la revendication 5, caractérisé en ce qu'on utilise, comme matière plastique, un polyamide ou un copolyamide renforcé par des fibres de verre.

7. Procédé selon l'une des revendications précédentes, caractérisé en ce qu'on injecte la matière plastique constituant les âmes isolantes (4, 5) dans des ouvertures de passage (29, 32, 34) pratiquées dans les parties intérieure et extérieure (2, 3).

8. Procédé selon l'une des revendications précédentes, caractérisé en ce qu'on réalise par injection les nervures isolantes (4, 5) sur les parties intérieure et extérieure (2, 3) en leur donnant des parois transversales (34, 36, 37).

Fig. 1

Fig. 2

Fig. 3

Fig. 4

Fig. 5

Fig. 6

Fig. 7

Fig. 8

Fig. 9

Fig. 10

Fig. 11